# EUROPÄISCHE PATENTSCHRIFT

(11) **EP 1 243 497 B1**
(45) Veröffentlichungstag und Bekanntmachung des Hinweises auf die Patenterteilung: **18.02.2004**
(21) Anmeldenummer: 01106880.6
(22) Anmeldetag: 20.03.2001
(51) Int. Cl.: B62D 7/14, B62D 5/30

(54) **Kraftfahrzeug mit mindestens einer Hinter-Achse mit lenkbaren Hinterrädern**
Motor vehicle with at least one rear axle with steerable rear wheels
Véhicule automobile avec au moins un essieu arrière avec des roues directionnelles

(43) Veröffentlichungstag der Anmeldung: 25.09.2002
(73) Patentinhaber: FAUN GmbH, D-91205 Lauf/Pegnitz (DE)
(72) Erfinder: Dohl, Klaus, 99423 Weimar (DE)
(74) Vertreter: Rau, Manfred, Dr. Dipl.-Ing.

(56) Entgegenhaltungen:
- DE-A- 4 214 790
- DE-A- 4 337 816
- US-A- 4 953 445

## Beschreibung

Die Erfindung betrifft ein Kraftfahrzeug nach dem Oberbegriff des Anspruches 1.

Bei schweren Kraftfahrzeugen, beispielsweise Kranfahrzeugen, die oft mehrere Hinter-Achsen aufweisen, weist mindestens eine, oft sogar mehrere Hinter-Achsen lenkbare Hinterräder auf, die den Lenkbewegungen der Vorderräder in einer elektronisch gesteuerten Folgesteuerung folgen. Die lenkbaren Hinterräder werden mittels hydraulischer Lenkantriebe gesteuert, die wiederum von einer Hinterachs-Lenk-Hydraulik-Versorgungs-Einheit mit Drucköl versorgt werden. Wenn diese Versorgungs-Einheit während des Fahrbetriebes ausfällt, dann besteht die Gefahr, daß das Fahrzeug aufgrund fehlender oder unerwünschter Hinterrad-Lenkbewegungen außer Kontrolle gerät. Aus der Praxis ist es daher bekannt, eine zusätzliche Pumpe vorzusehen, die bei Ausfall der Vorsorgungs-Einheit die Versorgung der Lenk-Antriebe übernimmt. Eine derartig Not-Versorgungs-Pumpe kann entweder elektrisch angetrieben werden oder aber über eine Achse mit einem Rad gekoppelt sein, so daß sie arbeitet, solange das Fahrzeug sich bewegt.

Hydro-pneumatische-Federungs-Systeme, die bei derartigen Kraftfahrzeugen eingesetzt werden, sind allgemein bekannt.

Der Erfindung liegt die Aufgabe zugrunde, das Kraftfahrzeug der gattungsgemäßen Art so auszugestalten, daß eine Zentrierung der gelenkten Hinterräder bei einem Ausfall der Hinterachs-Lenk-Hydraulik-Versorgungs-Einheit mit einfachen Mitteln zuverlässig erreicht wird.

Diese Aufgabe wird erfindungsgemäß durch die Merkmale im Kennzeichnungsteil des Anspruches 1 gelöst. Durch die erfindungsgemäßen Maßnahmen wird erreicht, daß bei einem Ausfall der Hinterachs-Lenk-Hydraulik-Versorgungs-Einheit der Hinterrad-Lenkantrieb mit den Hydraulik-Federn verbunden wird, so daß die Betätigung des Hinterrad-Lenkantriebes durch das in den Hydraulik-Federn befindliche, aufgrund des Fahrzeugsgewichts unter hohem Druck stehende Öl solange erfolgt, bis die lenkbaren Hinterräder für Geradeaus-Fahrt ausgerichtet sind, woraufhin dann der Lenkantrieb blockiert wird. Für diese Maßnahmen ist nur ein geringer zusätzlicher Aufwand bei der Steuerung und bezüglich eines zusätzlichen Ventils erforderlich.

Vorteilhafte Ausgestaltungen geben die Unteransprüche wieder.

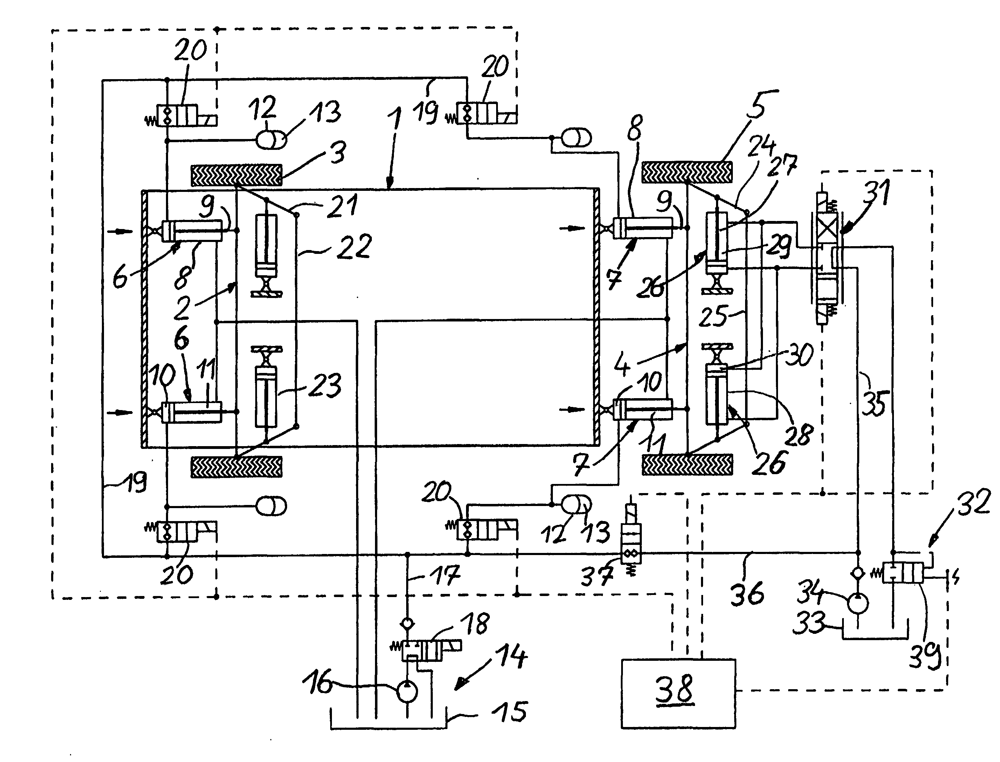

Weitere Merkmale, Vorteile und Einzelheiten der Erfindung ergeben sich aus der Beschreibung eines Ausführungsbeispieles anhand der Zeichnung, die in stark schematischer Darstellung ein Fahrzeug mit einem hydro-pneumatischen Federungs-System und einer Hinter-Achse mit lenkbaren Hinterrädern zeigt.

Das in der Zeichnung dargestellte Fahrzeug weist einen nur angedeuteten Fahrzeugaufbau 1 auf, der über eine Vorder-Achse 2 mit Vorrädern 3 und eine Hinter-Achse 4 mit Hinterrädern 5 auf dem Boden abgestützt ist. Die Vorder-Achse 2 ist über Hydraulik-Federn 6 gegenüber dem Fahrzeugaufbau 1 abgestützt. Die Hinter-Achse 4 ist ebenfalls über Hydraulik-Federn 7 gegenüber dem Fahrzeugaufbau 1 abgestützt. Die Hydraulik-Federn 6, 7 sind mit ihren Zylindern 8 am Fahrzeugaufbau 1 und mit ihren Kolbenstangen 9 an der Vorder-Achse 2 bzw. Hinter-Achse 4 angelenkt. Das Gewicht des Fahrzeugaufbaus 1 stützt sich über die Ölfüllung im Kolbenraum 10 und die jeweilige Kolbenstange 9 auf der jeweiligen Achse 2, 4 ab. Der die Kolbenstange 9 umgebende Ringraum 11 ist ebenfalls mit Öl gefüllt. Die Kolbenräume 10 und Ringräume 11 der Federn 6, 7 sind in üblicher Weise mit Druckspeichern 12 verbunden, die teilweise mit Druckgas gefüllt sind, gegen das das Ein- bzw. Ausfedern der Federn 6, 7 möglich ist. Die Federung der Hydraulik-Federn 6, 7 erfolgt also gegen ein Druckgaspolster 13 in den Druckspeichern 12. Aus Gründen der Übersichtlichkeit sind nur die den Kolbenräumen 10 zugeordneten Druckspeicher 12 der Hydraulik-Federn 6, 7 dargestellt. Das in der Zeichnung schematisch dargestellte Fahrzeug weist also ein hydro-pneumatisches Federungs-System auf.

Die Hydraulik-Federn 6, 7 sind über Versorgungs-Leitungen mit einer zentralen Hydraulik-Versorgungs-Einheit 14 verbunden. Die Versorgungs-Einheit 14 weist einen Tank 15 und eine Pumpe 16 auf, von der eine zentrale Versorgungs-Leitung 17 ausgeht, in die ein zentrales Steuer-Ventil 18 geschaltet hat. Von der Pumpe 16 aus gesehen, verzweigt sich die zentrale Versorgungs-Leitung 17 in zu den Kolbenräumen 10 der Federn 6, 7 führende Einzel-Versorgungs-Leitungen 19. Zugeordnet zu den Federn 6, 7 sind in den Einzel-Versorgungs-Leitungen 19 Versorgungs-Ventile 20 angeordnet. Die Verbindung der Ringräume 11 mit der Versorgungs-Einheit 14 wird nicht im einzelnen beschrieben, da es im Rahmen der Erfindung hierauf nicht ankommt und da es allgemeiner Stand der Technik ist.

Die Funktion der Versorgungs-Einheit 14 liegt darin, die Basis-Höheneinstellung der Hydraulik-Federn 6, 7 und damit die Bodenfreiheit des Fahrzeugs selber einzustellen. Bei einer eingestellten Länge der Federn 6, 7, d. h. bei einer fest vorgegebenen Bodenfreiheit des Fahrzeugs, sind sowohl die den Federn 6, 7 unmittelbar vorgeordneten Versorgungs-Ventile 20 als auch das zur Versorgungs-Einheit 14 gehörende, der Pumpe 16 unmittelbar nachgeschaltete zentrale Steuer-Ventil 18 geschlossen.

Die Vorderräder 3 sind lenkbar, was durch eine ihre Achsschenkel 21 verbindende Spurstange 22 und hydraulisch beaufschlagbare Vorderrad-Lenkantriebe 23 angedeutet ist.

Die Hinterräder 5 der Hinter-Achse 4 sind ebenfalls mit einem Lenksystem versehen, das eine Nachführ-Lenkung der Hinterräder 5 bei Lenkbewegungen der Vorräder 3 ausführt. Auch hier sind die Achsschenkel 24 der Hinterräder 5 mittels einer Spurstange 25 miteinander gekoppelt. Die Lenkbewegung wird von zwei hydraulisch beaufschlagbaren Hinterrad-Lenkantrieben 26 bewirkt, deren Kolbenstangen 27 jeweils an einem Achsschenkel 24 angebracht ist, während ihre Zylinder 28 am Fahrzeugaufbau 1 oder der Hinter-Achse 4 festgelegt sind. Der Ringraum 29 des einen Zylinders 28 ist mit dem Kolbenraum 30 des anderen Zylinders 28 und umgekehrt und jeweils gemeinsam mit einem Lenk-Ventil 31 verbunden. Die Hydraulik-Versorgung der Lenkantriebe 26 erfolgt von einer Lenk-Hydraulik-Versorgungs-Einheit 32. Die Versorgungs-Einheit 32 weist ebenfalls einen Tank 33 und eine Pumpe 34 auf, die über eine Lenk-Versorgungs-Leitung 35 mit dem Lenk-Ventil 31 verbunden ist.

Hinter dem zentralen Steuer-Ventil 18 und vor den Versorgungs-Ventilen 20 mündet aus der zentralen Versorgungs-Leitung 17 bzw. an deren Übergang in die Einzel-Versorgungs-Leitungen 19 eine Not-Verbindungs-Leitung 36 ein, die zwischen der Pumpe 34 und dem Lenk-Ventil 31 in die Leitung 35 einmündet. In dieser Not-Verbindungs-Leitung 36 befindet sich ein Not-Ventil 37.

Es ist eine zentrale Steuerung 38 vorgesehen, über die alle Ventile 18, 20, 31,37 angesteuert werden; diese sind daher als Magnet-Ventile ausgebildet. Der Versorgungs-Einheit 32 ist eine Durchfluß-Kontroll-Einrichtung 39 nachgeordnet, über die erfaßt wird, ob die Versorgungs-Einheit 32 arbeitet Die Einrichtung 39 ist ebenfalls auf die Steuerung 38 geschaltet

Grundsätzlich ist die Hydraulik-Versorgung der Federn 6, 7 mittels der Versorgungs-Einheit 14 von der Versorgung des Hinterrad-Lenkantriebes 26 mittels der Versorgungs-Einheit 32 getrennt. Wenn die Hinterachs-Lenk-Hydraulik-Versorgungs-Einheit 32 ausfällt, was von der Durchfluß-Kontroll-Einrichtung 39 zur Steuerung 38 gemeldet wird, dann werden die Versorgungs-Ventile 20 der Kolbenräume 10 der Federn 6, 7 derart umgeschaltet, daß die Einzel-Versorgungs-Leitungen 19 auf die Verbindungs-Leitung 36 geschaltet werden. Danach wird das Not-Ventil 37 geöffnet, so daß dann der Hydraulik-Druck in den Kolbenräumen 10 der Federn 6, 7 vor dem Hinterachs-Lenk-Ventil 31 ansteht. Dieses wird in der Weise geschaltet, daß die Hinterrad-Lenkantriebe 26 derart in ihre Mittelstellung verfahren werden, daß die Hinterräder 5 in der der Zeichnung dargestellten Stellung für die Geradeaus-Fahrt zentriert und hydraulisch oder mechanisch blockiert werden. Wenn diese Geradeaus-Stellung erreicht ist, wird das Hinterrad-Lenk-Ventil 31 geschlossen. Die für die Zentrierung der Hinterräder 5 in ihrer Geradeaus-Stellung erforderliche Ölmenge, die aus dem jeweiligen Kolbenraum 10 der Federn 6, 7 abgezogen wird, bewirkt nur eine geringe Reduktion der Länge der Federn 6, 7, d. h. nur eine geringfügige Absenkung des Fahrzeugaufbaus 1 von beispielsweise etwa 1 cm gegenüber dem Boden. Die Versorgungs-Einheit 10 wird hierbei nicht betätigt. Da auf dem Öl in den Kolbenräumen 10 der Federn 6, 7 das Gesamtgewicht des Fahrzeugaufbaus 1 lastet, ist der bei dem erwähnten Notbetrieb an den Hinterrad-Lenkantrieben 26 anstehende Druck sehr hoch, so daß eine zuverlässige Zentrierung der Hinterräder 5 erreicht wird.

Die beiden geschilderten Hydraulik-Versorgungs-Einheiten können auch als eine gemeinsame zentrale Versorgungs-Einheit ausgebildet sein.

## Patentansprüche

1. Kraftfahrzeug
- mit einem Fahrzeugaufbau (1),
- mit einer Vorder-Achse (2) mit lenkbaren Vorderrädern (3),
- mit mindestens einer Hinter-Achse (4) mit lenkbaren Hinterrädern (5),
- mit zwischen den Achsen (2, 4) und dem Fahrzeugaufbau (1) angeordneten Hydraulik-Federn (6, 7) eines hydro-pneumatischen Federungs-Systems,
- mit einer Hydraulik-Versorgungs-Einheit (14), die mit den Hydraulik-Federn (6, 7) über ein Feder-Versorgungs-Leitungs-System und den Hydraulik-Federn (6, 7) vorgeordnete ansteuerbare Feder-Versorgungs-Ventile (20) verbunden ist,
- mit mindestens einem hydraulisch beaufschlagbaren Hinterrad-Lenkantrieb (26) für die lenkbaren Hinterräder (5),
- mit einer Hinterachs-Lenk-Hydraulik-Versorgungs-Einheit (32), die mit dem Hinterrad-Lenkantrieb (26) über eine Lenk-Versorgungs-Leitung (35) und mindestens ein dem Lenkantrieb vorgeordnetes ansteuerbares Hinterrad-Lenk-Ventil (31) verbunden ist,
- mit einer Steuerung (38) zur Ansteuerung der Ventile (18, 20, 31, 37) und
- mit einer Hydraulik-Not-Versorgungs-Einrichtung für den mindestens einen Hinterrad-Lenkantrieb (26),
**dadurch gekennzeichnet,**
**daß** das Feder-Versorgungs-Leitungs-System über eine Not-Verbindungs-Leitung (36) mit der Lenk-Versorgungs-Leitung (35) verbunden ist,
**daß** in der Not-Verbindungs-Leitung (36) ein von der Steuerung (38) ansteuerbares Not-Ventil (37) angeordnet ist und
**daß** die Steuerung (38) derart eingerichtet ist, **daß** bei Ausfall der Lenk-Hydraulik-Versorgungs-Einheit (32) die Feder-Versorgungs-Ventile (20), das Not-Ventil (37) und das mindestens eine Hinterrad-Lenk-Ventil (31) derart geschaltet werden, **daß** der Hinterrad-Lenkantrieb (26) solange mit den Hydraulik-Federn (6, 7) verbunden wird, bis die Hinterräder (5) für Geradeaus-Fahrt ausgerichtet sind.

2. Kraftfahrzeug nach Anspruch 1, **dadurch gekennzeichnet,**
**daß** die Hydraulik-Federn (6, 7) als hydraulisch beaufschlagbare Kolben-Zylinder-Einheiten ausgebildet sind, deren Zylinder (8) und deren Kolbenstange (9) einerseits mit dem Fahrzeugaufbau (1) und andererseits mit den Achsen (2, 4) verbunden sind, und
**daß** die dem Fahrzeugaufbau (1) benachbarten Räume (10) der Hydraulik-Federn (6, 7) mit dem mindestens einen Hinterrad-Lenkantrieb (26) verbindbar sind.

3. Kraftfahrzeug nach Anspruch 1 oder 2, **dadurch gekennzeichnet,**
**daß** der mindestens eine Hinterrad-Lenkantrieb (26) jeweils als hydraulisch beaufschlagbare Kolben-Zylinder-Einheit ausgebildet ist.

4. Kraftfahrzeug nach einem der Ansprüche 1 bis 3, **dadurch gekennzeichnet,**
**daß** die Hydraulik-Versorgungs-Einheit (14) und die Hinterachs-Lenk-Hydraulik-Versorgungs-Einheit (32) als gemeinsame Haupt-Hydraulik-Versorgungs-Einheit ausgebildet sind.

## Claims

1. Motor vehicle, comprising
- a body (1);
- a front axle (2) with steerable front wheels (3);
- at least one rear axle (4) with steerable rear wheels (5);
- hydraulic springs (6, 7) of a hydro-pneumatic spring system, which are disposed between the axles (2, 4) and the body (1);
- a hydraulic supply unit (14), which is connected to the hydraulic springs (6, 7) by way of a spring supply conduit system and triggerable spring supply valves (20) which are disposed upstream of the hydraulic springs (6, 7);
- at least one hydraulically actuated rear-wheel steering drive (26) for the steerable rear wheels (5);
- a rear-wheel steering hydraulic supply unit (32), which is connected to the rear-wheel steering drive (26) by way of a steering supply conduit (35) and at least one triggerable rear-wheel steering valve (31) which is disposed upstream of the steering drive;
- a control (38) for triggering the valves (18, 20, 31, 37); and
- emergency hydraulic supply means for the at least one rear-wheel steering drive (26);
**characterized**
**in that** the spring supply conduit system (36) is connected to the steering supply conduit (35) via an emergency connecting conduit (36);
**in that** an emergency valve (37), which is triggerable by the control (38), is disposed in the emergency connecting conduit (36); and
**in that** the control (38) is adjusted in such a way that upon failure of the steering hydraulic supply unit (32), the spring supply valves (20), the emergency valve (37) and the at least one rear-wheel steering valve (31) are connected such that the rear-wheel steering drive (26) is linked to the hydraulic springs (6, 7) until the rear wheels (5) are directed for straight running.

2. A motor vehicle according to claim 1, **characterized**
**in that** the hydraulic springs (6, 7) are hydraulically actuated piston-cylinder units, the cylinder (8) and piston rod (9) of which are connected to the body (1) on the one hand and to the axles (2, 4) on the other; and
**in that** the chambers (10), adjoining the body (1), of the hydraulic springs (6, 7) are connectable to the at least one rear-wheel steering drive (26).

3. A motor vehicle according to claim 1 or 2, **characterized in that** the at least one rear-wheel steering drive (26) is a hydraulically actuated piston-cylinder unit.

4. A motor vehicle according to one of claims 1 to 3, **characterized in that** the hydraulic supply unit (14) and the rear-axle steering hydraulic supply unit (32) are designed as a joint principal hydraulic supply unit.

## Revendications

1. Véhicule, comportant
- une carrosserie (1) de véhicule,
- un essieu avant (2) avec des roues avant directrices (3),
- au moins un essieu arrière (4) avec des roues arrière directrices (5),
- des ressorts hydrauliques (6, 7) d'un système d'amortissement hydro-pneumatique disposé entre les essieux (2, 4) et la carrosserie (1) de véhicule,
- une unité d'alimentation hydraulique (14), qui est reliée aux ressorts hydrauliques (6, 7) par l'intermédiaire d'un système de conduites d'alimentation des ressorts, et à des vannes d'alimentation (20) des ressorts pouvant être commandées, disposées en amont des ressorts hydrauliques (6, 7),
- au moins un entraînement de direction (26) pour les roues arrière directrices (5), pouvant être alimenté par voie hydraulique,
- une unité d'alimentation hydraulique (32) d'essieu arrière directeur, qui est reliée à l'entraînement de direction (26) des roues arrière par l'intermédiaire d'une conduite d'alimentation de direction (35), et à au moins une vanne de direction (31) des roues arrière pouvant être commandée, disposée en amont de l'entraînement de direction,
- une commande (38) pour la commande des vannes (18, 20, 31, 37), et
- un dispositif d'alimentation hydraulique de secours, pour le seul entraînement de direction (26) au moins des roues arrière,
**caractérisé en ce que**
le système de conduites d'alimentation des ressorts est relié à la conduite d'alimentation de direction (35) par l'intermédiaire d'une conduite de liaison de secours (36),
une vanne de secours (37) pouvant être commandée par la commande (38) est disposée dans la conduite de liaison de secours (36), et
la commande (38) est agencée de telle sorte que, lors d'une défaillance de l'unité d'alimentation hydraulique de direction (32), les vannes d'alimentation (20) des ressorts, la vanne de secours (37), et la seule vanne (31) au moins d'essieu arrière directeur puissent être commutées, de sorte que l'entraînement de direction (26) des roues arrière soit relié aux ressorts hydrauliques (6, 7) jusqu'à ce que les roues arrière (5) soient orientées pour une marche en ligne droite.

2. Véhicule selon la revendication 1, **caractérisé en ce que**
les ressorts hydrauliques (6, 7) sont réalisés sous la forme de vérins pouvant être alimentés par voie hydraulique, dont les cylindres (8) et les tiges de piston (9) sont reliés, d'une part à la carrosserie (1) de véhicule, et d'autre part aux essieux (2, 4), et
les chambres (10) des ressorts hydrauliques (6, 7) adjacentes à la carrosserie (1) de véhicule peuvent être reliées au seul un entraînement de direction (26) au moins des roues arrière.

3. Véhicule selon la revendication 1 ou 2, **caractérisé en ce que**
le seul entraînement de direction (26) au moins des roues arrière est réalisé sous la forme d'un vérin pouvant être alimenté par voie hydraulique.

4. Véhicule selon l'une quelconque des revendications 1 à 3, **caractérisé en ce que**
l'unité d'alimentation hydraulique (14) et l'unité d'alimentation hydraulique (32) d'essieu arrière directeur sont réalisées sous la forme d'une unité d'alimentation hydraulique principale commune.
